# EUROPEAN PATENT APPLICATION

(11) **EP 4 383 894 A1**
(43) Date of publication of application: **12.06.2024**
(21) Application number: 22853480.6
(22) Date of filing: 04.08.2022
(51) Int. Cl.: H04W 72/04, H04W 72/12, H04L 5/00, H04L 27/26

(54) **METHOD AND APPARATUS FOR TRANSMITTING AND RECEIVING SIGNALS IN WIRELESS COMMUNICATION SYSTEM**

(30) Priority: 05.08.2021 US 202163230006 P
(71) Applicant: LG Electronics Inc., Yeongdeungpo-gu Seoul 07336 (KR)
(72) Inventor: CHOI, Seunghwan, Seoul 06772 (KR); KIM, Seonwook, Seoul 06772 (KR); YANG, Suckchel, Seoul 06772 (KR)
(74) Representative: Frenkel, Matthias Alexander
(86) International application number: PCT/KR2022/011532
(87) International publication number: WO 2023/014104

(57) **Abstract**

A method and apparatus for transmitting and receiving signals in a wireless communication system, disclosed in the present specification, include a PTRS mapping operation different from the prior art. In particular, when an interval between a plurality of physical channels is less than a threshold value, PTRSs are continuously mapped at uniform symbol intervals throughout a plurality of PDSCHs.

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving reference signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, provided herein is a method of transmitting and receiving a signal by a user equipment (UE) in a wireless communication system, including receiving downlink control information (DCI) for scheduling a plurality of physical channels; and transmitting and receiving the physical channels based on the DCI. Phase tracking reference signals (PTRSs) are mapped at an (L-1)-symbol gap based on each demodulation reference signal (DMRS) in the physical channels, based on a gap between the physical channels being equal to or greater than a first threshold. The PTRSs are mapped at the (L-1)-symbol gap based on a first DMRS in a first physical channel which is most advanced in a time domain among the physical channels, based on the gap between the physical channels being less than the first threshold.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to one embodiment of the present disclosure, when data signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of Drawings

FIG. 1 illustrates a radio frame structure.
FIG. 2 illustrates a resource grid during the duration of a slot.
FIG. 3 illustrates a self-contained slot structure.
FIGS. 4 to 11 are diagrams illustrating methods for transmitting and receiving a signal according to the embodiments of the present disclosure.
FIGS. 12 to 15 illustrate devices according to an embodiment of the present disclosure.

### BEST MODE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

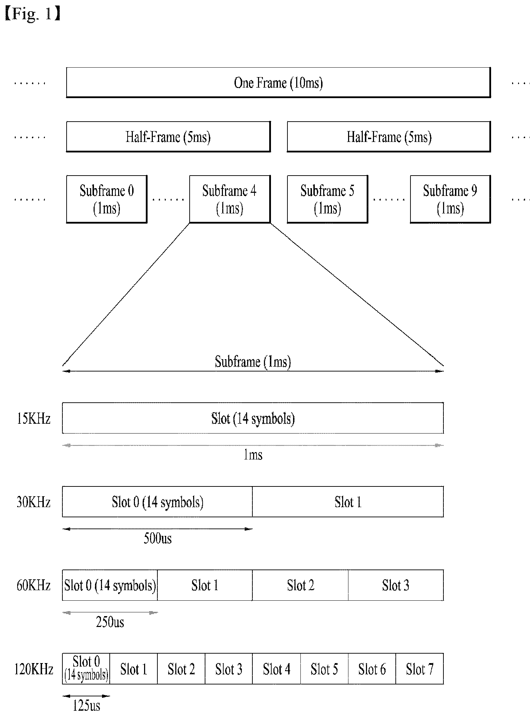

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u} | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

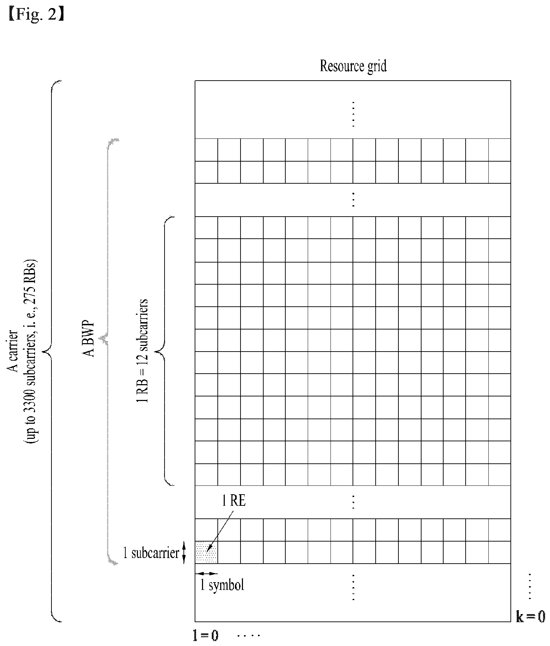

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

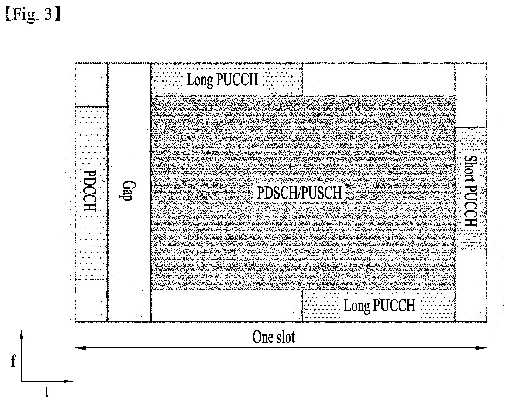

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### DMRS (demodulation reference signal)

A DMRS of NR is characteristically transmitted only when necessary to enhance network energy efficiency and ensure forward compatibility. The density of DMRSs in the time domain may vary according to the speed or mobility of a UE. The density of DMRSs may be increased in the time domain in order to track fast change of a radio channel in NR.

### (1) DL DMRS-Related Operation

A DMRS-related operation for PDSCH transmission/reception will now be described.

A BS transmits DMRS configuration information to the UE. The DMRS configuration information may refer to a DMRS-DownlinkConfig information element (IE). The DMRS-DownlinkConfig IE may include a dmrs-Type parameter, a dmrs-AdditionalPosition parameter, a maxLength parameter, and a phaseTrackingRS parameter. The 'dmrs-Type' parameter is a parameter for selecting a DMRS type to be used on DL. In NR, the DMRS may be divided into two configuration types: (1) DMRS configuration type 1 and (2) DMRS configuration type 2. DMRS configuration type 1 has a higher RS density in the frequency domain, and DMRS configuration type 2 has more DMRS antenna ports. The 'dmrs-AdditionalPosition' parameter is a parameter indicating the position of an additional DMRS on DL. The 'maxLength' parameter is a parameter indicating the maximum number of OFDM symbols for a DL front-loaded DMRS. The 'phaseTrackingRS' parameter is a parameter for configuring a DL phase tracking reference signal (PTRS).

In the DMRS, the first position of the front-loaded DMRS is determined according to a PDSCH mapping type (type A or type B), and an additional DMRS may be configured to support the UE of a high speed. The front-loaded DMRS occupies one or two consecutive OFDM symbols and is indicated by RRC signaling and DCI.

The BS generates a sequence used for the DMRS based on the DMRS configuration (S120). The BS maps the generated sequence to REs (S130). Here, the RE may include at least one of time, frequency, an antenna port, or a code.

The BS transmits the DMRS to the UE on the REs. The UE receives a PDSCH using the received DMRS.

### (2) UL DMRS-Related Operation

A DMRS-related operation for PUSCH reception will now be described.

A UL DMRS-related operation is similar to the DL DMRS-related operation, and the names of DL-related parameters may be replaced with the names of UL-related parameters. For example, the DMRS-DownlinkConfig IE may be replaced with a DMRS-UplinkConfig IE, the PDSCH mapping type may be replaced with a PUSCH mapping type, and the PDSCH may be replaced with a PUSCH. In the DL DMRS-related operation, the BS may be replaced with the UE and the UE may be replaced with the BS.

Sequence generation for a UL DMRS may be defined differently according to whether transform precoding is enabled. For example, upon using cyclic prefix orthogonal frequency division multiplexing (CP-OFDM) (i.e., when transform precoding is not enabled), the DMRS uses a pseudo-noise (PN) sequence. Upon using discrete Fourier transform-spread-OFDM (DFT-s-OFDM) (i.e., when transform precoding is enabled), the DMRS uses a Zadoff-Chu (ZC) sequence with a length of 30 or more.

### PTRS (Phase Tracking Reference Signal)

In millimeter wave (mmWave), effects of phase noise are large due to damage to RF hardware, so a transmitted or received signal is distorted in the time domain. This phase noise causes a common phase error (CPE) and inter-carrier interference (ICI) in the frequency domain. In particular, an oscillator phase noise at a high carrier frequency enables compensation, and the same phase rotation occurs for all subcarriers occurs due to the phase noise. Therefore, a PTRS is defined in NR in order to estimate and compensate for this CPE.

### (1) DL PTRS Related Operation

The BS transmits PTRS configuration information to the UE. The PTRS configuration information may refer to a PTRS-DownlinkConfig IE. The PTRS-DownlinkConfig IE may include a frequencyDensity parameter, a timeDensity parameter, an epre-Ratio parameter, a resourceElementOffset parameter, etc. The 'frequencyDensity' parameter is a parameter representing the presence and frequency density of DL PTRSs as a function of the scheduled bandwidth (BW). The 'timeDensity' parameter is a parameter representing the presence and time density of DL PTRSs as a function of a modulation and coding scheme (MCS). The 'epre-Ratio' parameter is a parameter indicating an energy per resource element (EPRE) between a PTRS and a PDSCH.

The BS generates a sequence used for the PTRS according to the PTRS configuration information. The sequence for the PTRS is generated using a DMRS sequence of the same subcarrier. Sequence generation for the PTRS may be defined differently depending on whether transform precoding is enabled.

Next, the BS maps the generated sequence to REs. The PTRS is mapped to time domain resources at a specific symbol gap starting from a start symbol of PDSCH allocation. When a DMRS symbol is present, the PTRS is mapped starting from the next symbol of the DMRS symbol. The specific symbol gap may be 1, 2 or 4 symbols. In relation to RE mapping of the PTRS, the frequency location of the PTRS is determined by the frequency location of an associated DMRS port and an RRC parameter UL-PTRS-RE-offset. Here, UL-PTRS-RE-offset is included in PTRS configuration and indicates a subcarrier offset of a UL PTRS for a CP-OFDM. On DL, a PTRS port is associated with a DMRS port with the lowest index among scheduled DMRS ports. On UL, the BS configures which DMRS port is associated with the PTRS port through UL DCI.

The BS transmits the PTRS to the UE on the REs. The UE compensates for phase noise using the received PTRS.

### (2) UL PTRS-Related Operation

A UL PTRS-related operation is similar to the above-described UL PTRS-related operation, and the names of parameters related to DL may be replaced with the names of parameters related to UL.

That is, the PTRS-DownlinkConfig IE may be replaced with a PTRS-UplinkConfig IE, and in a DL PTRS-related operation, the BS may be replaced with the UE, and the UE may be replaced with the BS.

Likewise, sequence generation for the PTRS may be defined differently depending on whether transform precoding is enabled.

### 1. PTRS Transmission and Reception in High-Frequency Band

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).

Frequency bands above FR1 and FR2 (e.g., bands from 52.6 GHz to 114.25 GHz, and more particularly, bands from 52.6 GHz to 71 GHz) may be referred to as FR2-2. The waveforms, SCSs, CP lengths, timings, etc. defined for FR1 and FR2 in the current NR system may not be applied to FR2-2.

An NR system uses a DMRS signal for a control channel and a data channel in order to perform coherent demodulation. The DMRS is inserted into resources to which the control/data channel is allocated and is used for channel estimation for coherent demodulation. Fixed patterns of the DMRS are defined depending on the control/data channel or a used waveform. Meanwhile, the PTRS is used to estimate/compensate for phase noise occurring in a frequency band above FR2. The fixed patterns of the PRTS are also defined depending on the control/data channel and the waveform.

Meanwhile, in the NR system operating in a high frequency band above 52.6 GHz, effects of phase noise may increase relative to phase noise in the FR1/FR2 band. In particular, among the effects of the phase noise, ICI significantly increases. In the case of using the PTRS supported in the existing Rel-15/16 NR, performance degradation may occur when estimating and compensating for phase noise at a receiving end. More specifically, phase noise (ICI) may not be estimated correctly due to interference between adjacent subcarriers, resulting in a situation in which compensation for this is difficult. This phenomenon is one of unique characteristics that occurs in a high frequency band (e.g., 60 GHz, FR2-2).

Meanwhile, an operation of scheduling a plurality of PDSCHs or PUSCHs by one DCI in the high frequency band may be supported. An operation of scheduling a plurality of PDSCHs by one DCI may be referred to as multi-PDSCH scheduling, and an operation of scheduling a plurality of PUSCHs by one DCI may be referred to as multi-PUSCH scheduling. For a plurality of PDSCHs or PUSCHs scheduled by one DCI, when an existing PTRS mapping method in the time domain of Rel-15/16 is used without change, the PTRS is mapped independently with respect to each PDSCH or each PUSCH. In other words, the operation described in the existing 3GPP NR 38.211 document is performed upon each PDSCH or each PUSCH.

Hereinafter, in this specification, "PDSCH" or "PUSCH" is simply described as "PDSCH" for convenience of description. "PDSCHs" may be interpreted as "PDSCHs" or "PUSCHs", and "each PDSCH" may be interpreted as "each PDSCH" or "each PUSCH". In addition, a PDSCH described herein may be interpreted as a PUSCH. This may be expanded such that "the UE receives a PDSCH" or "the BS transmits a PDSCH" may be interpreted as "the UE transmits a PUSCH" or "the BS receives a PUSCH".

Unlike the conventional method, when PTRSs are continuously mapped from the first PDSCH to the last PDSCH scheduled by the same DCI with respect to a plurality of PDSCHs or a plurality of PUSCHs scheduled by one DCI, more efficient use of the PTRS is expected.

The present disclosure describes a method of continuously mapping PTRSs in the time domain to a plurality of PDSCHs scheduled by one DCI.

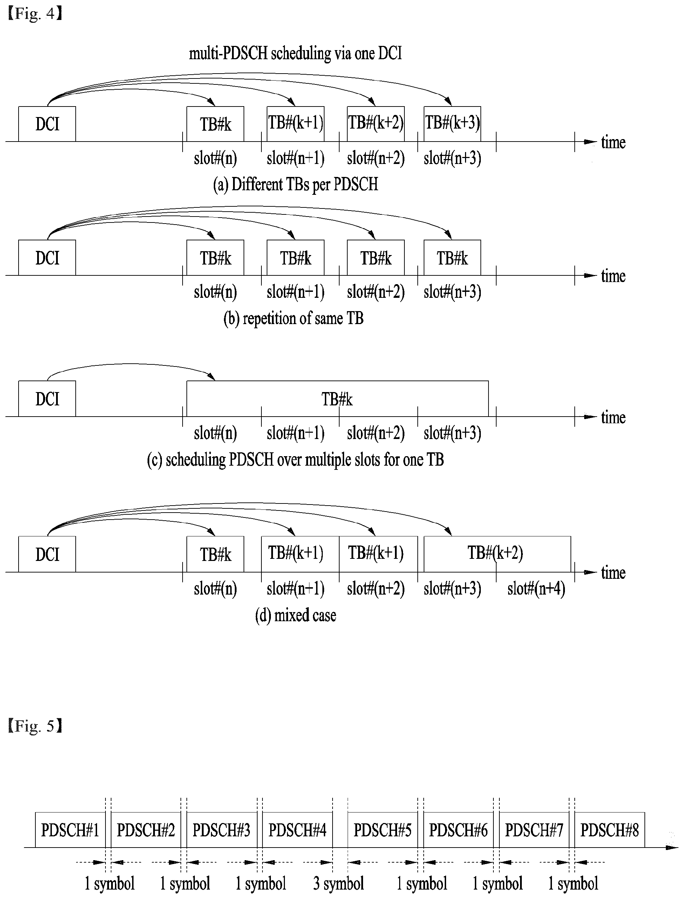

In a plurality of PDSCHs scheduled by one DCI, different individual TBs may be configured for respective PDSCHs. FIG. 4(a) shows an example in which different TBs are configured for respective PDSCHs. Referring to FIG. 4(a), the UE receives a PDSCH for which TB#k scheduled in slot #n is configured, a PDSCH for which TB#(k+1) scheduled in slot #(n+1) is configured, a PDSCH for which TB#(k+2) scheduled in slot #(n+2) is configured, and a PDSCH for which TB#(k+3) scheduled in slot #(n+3) is configured.

The same TB may be transmitted repeatedly on all PDSCHs. FIG. 4(b) shows an example in which the same TB is repeatedly configured for multiple PDSCHs. Referring to FIG. 4(b), TB#k is repeatedly transmitted 4 times with respect to 4 PDSCHs scheduled respectively in slot #n to slot #(n+3).

One TB (or all or part of scheduled TBs) may be configured across a plurality of scheduled PDSCHs (or slots). FIG. 4(c) shows an example in which one TB is configured across a plurality of scheduled PDSCHs (or slots). Referring to FIG. 4(c), TB#k is dividedly transmitted over a plurality of slots. FIG. 4(c) shows that TB#k is continuously configured in the time domain over four slots. However, PDSCHs in each slot may be continuous in the time domain, and a gap of one or more symbols may be included between PDSCHs.

FIGS. 4(a), 4(b), and 4(c) are combined, so that the same TB may be configured for some of a plurality of PDSCHs, different TBs may be configured for some PDSCHs, or a specific TB may be configured over a plurality of slots. FIG. 4(d) shows an embodiment of a combination case. Referring to FIG. 4(d), a plurality of PDSCHs scheduled through one PDSCH include all examples of FIGS. 4(a), 4(b), and 4(c).

All methods proposed below will be described based on the example of FIG. 4(a) in which individual TBs are configured for PDSCHs scheduled by one DCI. However, this is for convenience of description, and the proposed methods described below may also be applied to the cases of FIGS. 4(b), 4(c), and 4(d).

For a plurality of PDSCHs scheduled by one DCI, a symbol gap may be present between adjacent PDSCHs. For example, when N PDSCHs are scheduled by one DCI, a total of N-1 symbol gaps may be present. Each symbol gap may have a value equal to or greater than 0. In addition, all of the N-1 symbol gaps may be the same or may be different depending on configuration. The N PDSCHs may be configured to be allocated without a symbol gap. A symbol gap between PDSCHs may be configured to be 0 symbols or 1 symbol.

In this specification, when a symbol gap between two signals is "a", there are "a" symbols that are not mapped to both signals between a preceding signal and a following signal. Additionally, when a signal Y is present after a gap of "a" symbols based on a signal X, there are "a" symbols that are not mapped to both signals between the signal X and the signal Y. When a symbol Y is present after a gap of "a" symbols from a symbol X, "a" symbols other than the symbol X and the symbol Y are present between the symbol X and the symbol Y. When a symbol Y is present after a gap of "a" symbols including a symbol X, a-1 symbols are present between the symbol X and the symbol Y,

### 1.1. Method of continuously mapping PTRSs for each section according to size of symbol gap

Among N PDSCHs scheduled by one DCI, when a symbol gap between two adjacent PDSCHs is less than a specific value (=Y), PTRSs may be continuously mapped to the two PDSCHs.

Among the N PDSCHs scheduled by one DCI, when the symbol gap between two adjacent PDSCHs is Y or more, the PTRSs are not continuously mapped.

For example, as shown in FIG. 5, it is assumed that 8 PDSCHs are scheduled by one DCI and Y=2 symbols. Y=2 is an example for description, and Y may have 0 or other positive integer values in addition to 2. A symbol gap between the fourth and fifth PDSCHs is 3 symbols, and the symbol gap between the other PDSCHs is 1 symbol.

For four PDSCHs from the first PDSCH to the fourth PDSCH, the PTRSs are continuously mapped at an (L-1)-symbol gap to PDSCHs from the first PDSCH to the fourth PDSCH. Since the gap between the fourth PDSCH and the fifth PDSCH is 3 symbols, which means that the gap is greater than Y (= 2), the PTRSs are not continuously mapped to the fourth PDSCH and the fifth PDSCH. For four PDSCHs from the fifth PDSCH to the eighth PDSCH, the PTRSs are continuously mapped at an (L-1)-symbol gap to PDSCHs from the fifth PDSCH to the eighth PDSCH.

For a DL PDSCH, the parameter L, which is the gap of the PTRS in the time domain, may be an LPT-RS configurable as timeDensity of PTRS-DownlinkConfig. For a UL PUSCH (CP-OFDM), the parameter L may be an LPT-RS configurable with timeDensity of PTRS-UplinkConfig. For a PUSCH (DFT-s-OFDM), the parameter L may be configured as timeDensityTransformPrecoding (LPT-RS=2) or as LPT-RS=1.

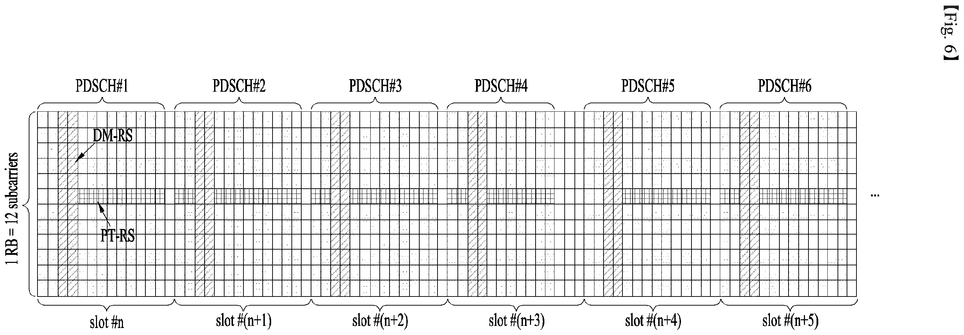

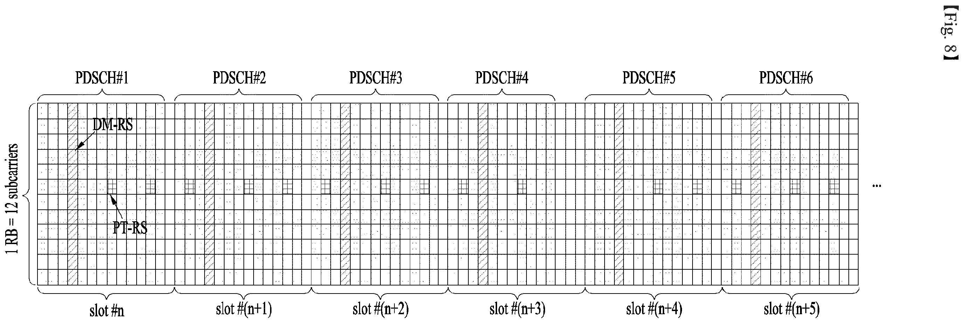

FIG. 6 shows a more specific example of FIG. 5. In FIG. 6, 8 PDSCHs are scheduled through DCI. PDSCH#1/#2/#3/#5/#6/#7 are configured as 13 symbols, and PDSCH#4/#8 are configured as 11 symbols. A symbol gap between PDSCH#4 and PDSCH#5 is 3 symbols, and a symbol gap between the other PDSCHs is 1 symbol. A symbol gap in the time domain for a PTRS is configured as parameter L=1.

Referring to FIG. 6, since L=1, L-1=0. For four PDSCHs from the first PDSCH to the fourth PDSCH, the PTRS is continuously mapped at a 0-symbol gap to PDSCHs from the first PDSCH to the fourth PDSCH. Since the gap between the fourth PDSCH and the fifth PDSCH is 3 symbols, which means that the gap is greater than Y (= 2), the PTRSs are not continuously mapped to the fourth PDSCH and the fifth PDSCH. For four PDSCHs from the fifth PDSCH to the eighth PDSCH, the PTRSs are continuously mapped at a 0-symbol gap to PDSCHs from the fifth PDSCH to the eighth PDSCH.

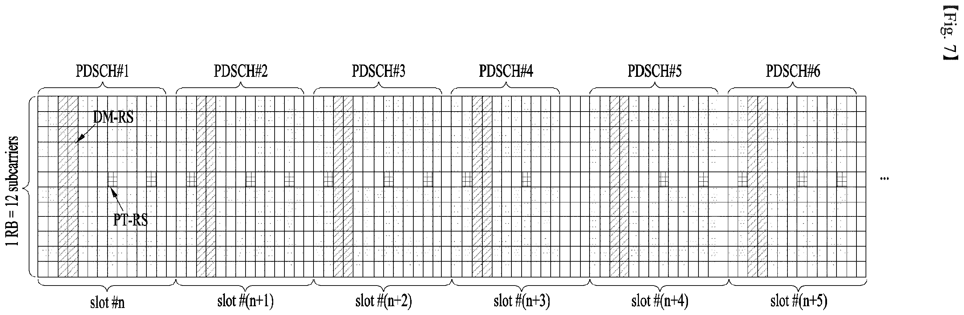

FIG. 7 shows another more specific embodiment of FIG. 5. In FIG. 7, 8 PDSCHs are scheduled through DCI. PDSCH#1/#2/#3/#5/#6/#7 are configured as 13 symbols, and PDSCH#4/#8 are configured as 11 symbols. A symbol gap between PDSCH#4 and PDSCH#5 is 3 symbols, and a symbol gap between the other PDSCHs is 1 symbol. A symbol gap in the time domain for a PTRS is configured as a parameter L=4.

Referring to FIG. 7, the PTRS is continuously mapped to four PDSCHs from the first PDSCH to the fourth PDSCH at a 3-symbol gap from the first PDSCH to the fourth PDSCH. Since a gap between the fourth and fifth PDSCH is 3 symbols, which means that the gap is greater than Y (= 2), the PTRSs are not continuous across the fourth PDSCH and the fifth PDSCH. For four PDSCHs from the fifth PDSCH to the eighth PDSCH, the PTRSs are continuously mapped at a 3-symbol gap to PDSCHs from the fifth PDSCH to the eighth PDSCH.

Referring to FIGS. 6 and 7, if the PTRSs are continuously mapped to PDSCHs from PDSCH #X to PDSCH #Y, this means that the first PTRS is mapped to a symbol after an (L-1)-symbol gap from the last DMRS symbol in PDSCH #X and then the PTRSs are mapped to symbols up to the last symbol of PDSCH#Y at an (L-1)-symbol gap.

L refers to density of PTRSs in the time domain defined in the specification. The value of L may be 1, 2, or 4. The value of L is not limited to 1, 2, or 4. As the value of L, only some values of 1, 2, and 4 may be used, or any positive integer value other than 1, 2, or 4 may be used. Y, which is a threshold value of a symbol gap between PDSCHs, may be predefined according to (i) an SCS or (ii) the (maximum) number of PDSCHs scheduled by one DCI. The network or the BS may configure Y for the UE through RRC signaling, etc. A default Y, which may be used (i) before RRC connection of the UE, (ii) during an initial access procedure of the UE, or (iii) before Y is configured through RRC signaling for the UE, may be predefined for each SCS. For example, the default Y for 960 kHz may be configured as L=1, L=2, or L=4.

A gap between adjacent PDSCHs may be in units of slots. If there is a slot gap of more than a certain number (=Y_slot) between two adjacent PDSCHs, PTRSs for the two PDSCHs may not be continuously mapped. For example, when Y_slot=2, if there is no slot gap or there is a gap of one slot between two adjacent PDSCHs, PTRSs are continuously mapped to the PDSCHs. If there is a gap of 2 slots or more between two adjacent PDSCHs, PTRSs are mapped to the two PDSCHs, respectively.

Alternatively, when slots including a plurality of PDSCHs are scheduled by one DCI, if the scheduled slots are consecutive, the PTRSs may be continuously mapped using methods described below. If the scheduled slots are not consecutive (i.e., if there is a gap of 1 slot or more between adjacent slots among the scheduled slots), the PTRSs may be configured not to be continuously mapped.

For convenience of description, a plurality of PDSCHs to which the PTRSs are continuously mapped is referred to as a chunk. A method of mapping the PTRSs in one chunk may include the following three methods. Each method may be applied independently or some methods may be applied through overlap. In the three methods below, it is assumed that L=4.

Method (1) The PTRSs are mapped starting from a symbol after an (L-1)-symbol gap from a front loaded (FL) DMRS symbol of the first PDSCH of the chunk (or from the first DMRS). The PTRSs are mapped up to the end of the chunk at the (L-1)-symbol gap. If the DMRS is located in the middle, the PTRSs are mapped starting from the symbol after the (L-1)-symbol gap from the DMRS, even if the gap between PTRSs exceeds L-1. Here, the PTRSs are mapped only to symbols other than DMRS symbols (see FIG. 8).

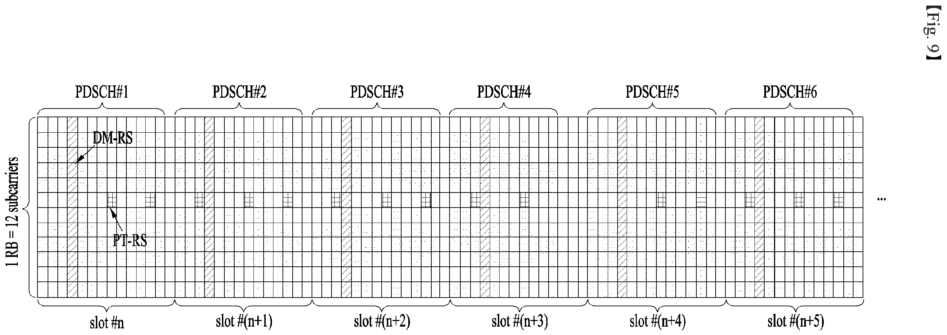

Method (2) The PTRSs are mapped starting from a symbol after an (L-1)-symbol gap from an FL DMRS of the first PDSCH of a chunk (or from the first DMRS). The PTRSs are mapped up to the end of the chunk at the (L-1)-symbol gap. Here, the PTRSs are mapped only to symbols other than DMRS symbols. Additionally, for each PDSCH in the chunk, the first PTRS of the first PDSCH after a slot boundary is mapped to a symbol after the (L-1)-symbol gap including the last symbol of a previous slot (regardless of whether the PTRS is mapped to the last symbol). Since the (L-1)-symbol gap includes the last symbol of the previous slot, the first PTRS of the first PDSCH after the slot boundary is mapped to a symbol after an (L-2)-symbol gap from the last symbol of the previous slot. In addition, when the DMRS is located in the middle, even if the gap between PTRSs exceeds L-1, the PTRSs are mapped starting from the symbol after the (L-1)-symbol gap from the DMRS (see FIG. 9).

Method (2)-1 The PTRSs are mapped starting from a symbol after an (L-1)-symbol gap from an FL DMRS of the first PDSCH of a chunk (or from the first DMRS). The PTRSs are mapped up to the end of a chunk at an (L-1)-symbol gap. Here, the PTRSs are mapped only to symbols other than DMRS symbols. Additionally, for each PDSCH of the chunk, the first PTRS of the first PDSCH after a slot boundary is mapped to a symbol after the (L-1)-symbol gap from the last symbol to which a PDSCH is allocated in a previous slot (regardless of whether a PTRS is mapped to the last symbol). Further, if the DMRS is located in the middle, even if a gap between PTRSs exceeds L-1, the PTRSs are mapped to symbols starting from a symbol after the (L-1)-symbol gap from the DMRS. As shown in FIG. 9, if the PDSCH is allocated up to the second-to-last symbol of slot #n, the same result as method (2) may be derived. If the PDSCHs are allocated only up to the third-to-last symbol of slot #n, and the PDSCH is not allocated to the last two symbols in slot #n, the PTRS may be allocated to the first symbol of slot #(n+1). If the PDSCH is allocated up to the last symbol of slot #n, the PTRS may be allocated to the second symbol of slot #(n+1).

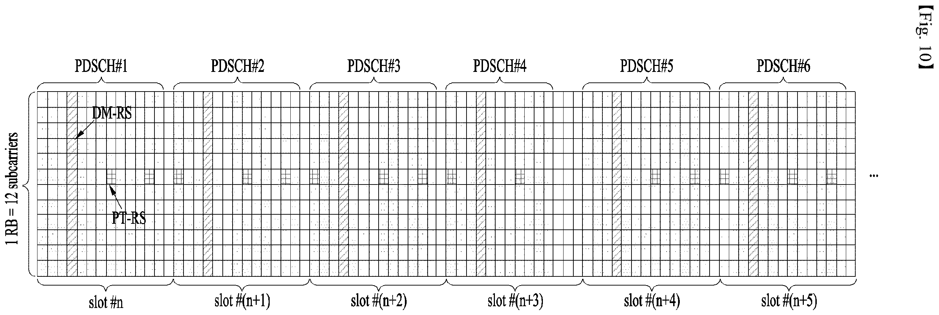

Method (3) The PTRSs are mapped starting from a symbol after an (L-1)-symbol gap from an FL DMRS of the first PDSCH of a chunk (or from the first DMRS). The PTRSs are mapped up to the end of the chunk at the (L-1)-symbol gap. Additionally, for each PDSCH of the chunk, the first PTRS of the first PDSCH after a slot boundary is mapped to the first symbol of a slot, even if a symbol gap between the PTRSs becomes smaller than L-1. Thereafter, the PTRSs are continuously mapped at the (L-1)-symbol gap. If the DMRS is located in the middle, the PTRSs are mapped starting from the symbol after the (L-1)-symbol gap from the DMRS, even if the gap between the PTRSs exceeds L-1. Here, the PTRSs are mapped only to symbols other than DMRS symbols (see FIG. 10).

In the above three methods, the PTRSs may be commonly mapped only to symbols other than the DMRS symbols.

In the above three methods, while the DMRS immediately after the FL DMRS of the first PDSCH (PDSCH#1) of the chunk is shown as being included in PDSCH#2, a DMRS having a gap of one or more symbols from the first DMRS of PDSCH #1 may also be present in PDSCH#1.

Additionally, depending on configuration of Y, all symbol gaps between adjacent PDSCHs may become Y or more, and all chunks scheduled by one DCI may include only one PDSCH. In this case, the PTRSs may be mapped based on each PDSCH, as in a conventional PTRS mapping method.

Additionally, the above methods may be applied when the number of PDSCHs scheduled by one DCI is more than a specific number, and the specific number may be predefined for each SCS or configured through RRC signaling, etc.

Additionally, depending on network configuration (or UL/DL configuration), there may be a semi-statically allocated UL slot (or channel). A PDSCH allocated to the corresponding slot may be determined to be invalid, and a signal may not be transmitted in the corresponding slot.

When an invalid PDSCH is present among a plurality of PDSCHs scheduled by one DCI, a symbol gap between adjacent PDSCHs may be determined only based on valid PDSCHs. For example, in FIG. 5, when PDSCH#7 is an invalid PDSCH, PDSCH#7 is excluded from PDSCHs for PTRS mapping. Then, since the gap between PDSCH#6 and PDSCH#8 exceeds 2 symbols, PDSCH#5 and PDSCH#6 are determined as one chunk, and PDSCH#8 is determined as another chunk.

However, the chunk may be determined for all PDSCHs scheduled by one DCI, regardless of the presence or absence of invalid PDSCHs.

### 1.2. Method of counting (L-1)-symbol gap within chunk based on size of symbol gap

For a plurality of PDSCHs to which PTRSs are continuously mapped, if a symbol gap between PDSCHs (hereinafter referred to as a PDSCH symbol gap) is less than a certain value (=Z), the PDSCH symbol gap is included upon counting L-1 symbols, which are a gap for mapping PTRSs. When the PDSCH symbol gap is Z or more, the PDSCH symbol gap may be excluded upon counting the L-1 symbols.

The PDSCH symbol gap may not be included in PDSCH resources. Nevertheless, when the PDSCH symbol gap is short (e.g., 1 symbol), it may be advantageous to calculate the (L-1)-symbol gap including the PDSCH symbol gap. Z may be predefined according to (i) an SCS or (ii) the (maximum) number of PDSCHs scheduled by one DCI. The network or the BS may configure Z for the UE through RRC signaling, etc. A default Z, which may be used (i) before RRC connection of the UE, (ii) during an initial access procedure of the UE, or (iii) before Y is configured for the UE through RRC signaling, may be predefined for each SCS. For example, the default Z for 480 kHz may be predefined as 0.

Additionally, the above methods may be applied when the number of PDSCHs scheduled by one DCI is more than a specific number, and the specific number may be predefined for each SCS or configured through RRC signaling, etc.

Additionally, the above methods may be applied when the size of the chunk (or the number of PDSCHs forming the chunk) is greater than a specific number, and the specific number may be predefined for each SCS or configured through RRC signaling, etc.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by a base station, but the operations may also be performed by the relay node.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Implementation Examples

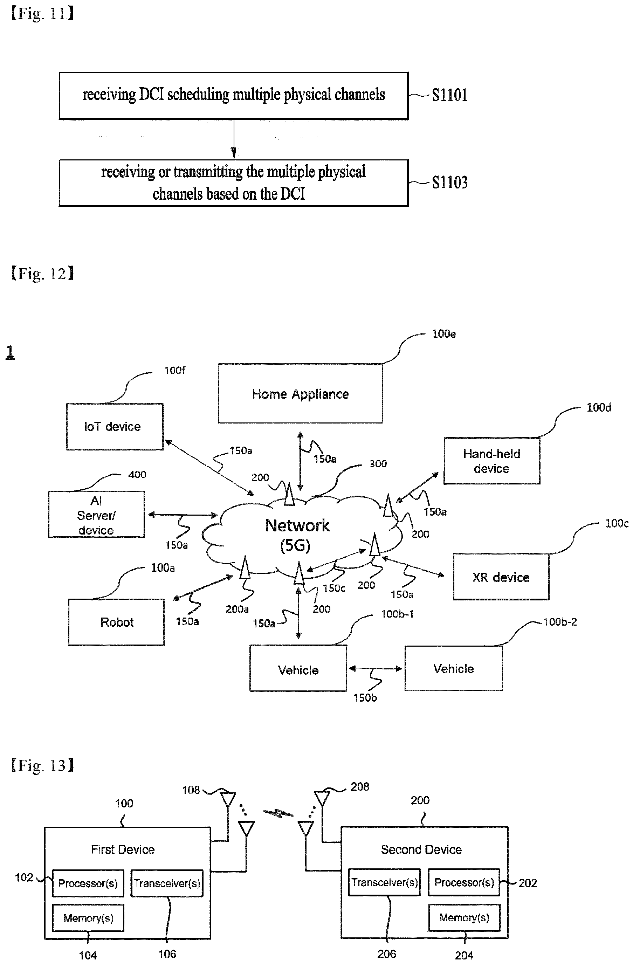

FIG. 11 is a flowchart of a signal transmission and reception method according to an embodiment of the present disclosure.

Referring to FIG. 11, an embodiment of the present disclosure may be performed by the UE may be configured to include receiving DCI for scheduling a plurality of physical channels (S1101), and transmitting or receiving the physical channels based on the DCI (S1103).

Although not shown, an embodiment of the present disclosure may be performed by the BS and may be configured to include transmitting DCI for scheduling a plurality of physical channels (corresponding to S1101), and transmitting or receiving the physical channels based on the DCI (corresponding to S1103).

In addition to the operation of FIG. 11, one or more of the operations described in Section 1 may be additionally performed.

### Referring to Section 1, the physical channels may be PDSCHs or PUSCHs

Referring to Section 1.1, when a gap between the physical channels is less than Y or Y slots, PTRSs are continuously mapped to the physical channels. Y may be referred to as a first threshold. If PTRSs are continuously mapped to a plurality of physical channels, this means that the PTRSs are mapped at predetermined intervals based on a first DMRS in a first physical channel that is most advanced in the time domain among the physical channels.

If the symbol gap between the physical channels is Y or more, PTRSs are mapped according to the prior art. In other words, the PTRSs are mapped based on each DMRS in the physical channels, based on the gap between the physical channels being equal to or greater than the first threshold.

The predetermined intervals may be determined by a parameter L. The parameter L is density of PTRSs in the time domain configured through RRC signaling. The parameter L may be configured through timeDensity of PTRS-DownlinkConfig, timeDensity of PTRS-UplinkConfig, or timeDensityTransformPrecoding.

Since the first threshold is Y or Y_slot, the first threshold may be a slot gap or a symbol gap. For example, if the first threshold is Y_slot which is the slot gap, Y_slot may be one slot. As another example, if the first threshold is Y, which is the symbol gap, Y may be determined based on one or more of (i) an SCS, (ii) the maximum number of a plurality of physical channels that may be scheduled by one DCI, and (iii) RRC signaling, as described previously. In addition, the default Y may be determined for each SCS.

In the process of mapping the PTRSs at the predetermined intervals based on the first DMRS in the first physical channel that is most advanced in the time domain among the physical channels, one of methods (1), (2), and (3) described above may be used.

According to method (1), as shown in FIG. 8, a first PTRS is mapped to a symbol after an (L-1)-symbol gap from a first DMRS in a first physical channel that is most advanced in the time domain among a plurality of physical channels. One or more second PTRSs are mapped at the (L-1)-symbol gap starting from the first PTRS. The second PTRSs are also mapped to a second physical channel located at a gap within a first threshold from the first physical channel while maintaining the (L-1)-symbol gap. However, if a second DMRS is located after the first DMRS in the time domain, the (L-1)-symbol gap between PTRSs is not maintained. A third PTRS is mapped to a symbol after the (L-1)-symbol gap from the second DMRS, and a gap between the last second PTRS and the third PTRS in the time domain may not be the (L-1)-symbol gap. After the third PTRS, one or more fourth PTRSs may be mapped at the (L-1)-symbol gap.

According to method (2), as shown in FIG. 9, a first PTRS is mapped to a symbol after an (L-1)-symbol gap from a first DMRS in a first physical channel that is most advanced in the time domain among a plurality of physical channels. One or more second PTRSs are mapped at the (L-1)-symbol gap. However, the (L-1)-symbol gap between the second PTRSs may not be maintained at a slot boundary. A third PTRS is mapped to an (L-1)-th symbol based on the last symbol of a slot in which the first DMRS is included, and a gap between the last second PTRS and the third PTRS in the time domain may not be the (L-1)-symbol gap. After the third PTRS, one or more fourth PTRSs may be mapped at the (L-1)-symbol gap.

According to method (3), as shown in FIG. 10, a first PTRS is mapped to a symbol after an (L-1)-symbol gap from a first DMRS in a first physical channel that is most advanced in the time domain among the physical channels. One or more second PTRSs are mapped at the (L-1)-symbol gap starting from the first PTRS. However, the (L-1)-symbol gap between the second PTRSs may not be maintained at a slot boundary. A third PTRS is mapped to a symbol immediately after the slot boundary, i.e., the foremost symbol (a symbol having an index 0) in the next slot of a slot in which the first DMRS is included, and a gap between the last second PTRS and the third PTRS in the time domain may not be at the (L-1)-symbol gap. One or more fourth PTRSs may be mapped at the (L-1)-symbol gap starting from the third PTRS.

Additionally, in order for PTRSs to be continuously mapped to a plurality of physical channels, the number of physical channels scheduled by one DCI may need to be a certain number, i.e., a second threshold or more. Therefore, in order for PTRSs to be mapped at predetermined intervals based on a first DMRS in a first physical channel that is most advanced in the time domain among a plurality of physical channels, a gap between the physical channels should be less than a first threshold and, at the same time, the number of the physical channels should be equal to or greater than a second threshold. If any one of the two conditions is not satisfied, PTRSs are mapped at predetermined intervals based on each DMRS in the physical channels.

Furthermore, if one or more of a plurality of physical channels scheduled by DCI overlap with a semi-statically allocated UL slot or channel, the corresponding one or more physical channels may be determined to be invalid physical channels. Accordingly, the corresponding one or more physical channels are not used upon determining a gap between physical channels. In Section 1.1, only the semi-statically allocated UL slots or channels are exemplified. However, if a semi-statically allocated DL slot or channel overlaps with one or more of a plurality of physical channels scheduled by the DCI, the corresponding one or more physical channels may be determined to be invalid physical channels. In addition, even when one or more of a plurality of physical channels scheduled by the DCI overlap with any other physical channels that have a higher priority, the corresponding one or more physical channels may be determined to be invalid physical channels.

In addition, referring to Section 1.2, when a symbol gap between physical channels is less than Z, a symbol gap between PTRSs is calculated including the gap between the physical channels. When the symbol gap between the physical channels is equal to or greater than Z, the symbol gap between PTRSs is calculated without including the gap between physical channels. Z may be referred to as a third threshold.

In addition to the operations described with reference to FIG. 11, a combination of one or more of the operations described with reference to FIGS. 1 to 10 and/or the operations described in Section 1 may be additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 12 illustrates a communication system 1 applied to the present disclosure.

Referring to FIG. 12, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 13 illustrates wireless devices applicable to the present disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

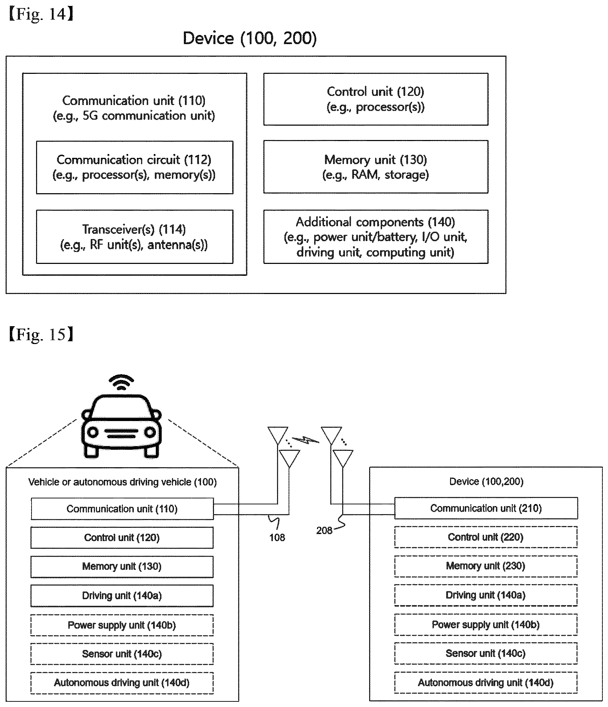

FIG. 14 illustrates another example of a wireless device applied to the present disclosure. The wireless device may be implemented in various forms according to a use case/service (refer to FIG. 12).

Referring to FIG. 14, wireless devices 100 and 200 may correspond to the wireless devices 100 and 200 of FIG. 13 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcasting terminal, a hologram device, a public safety device, an MTC device, a medical device, a FinTech device (or a finance device), a security device, a climate/environment device, the AI server/device (400 of FIG. 12), the BSs (200 of FIG. 12), a network node, or the like. The wireless device may be mobile or fixed according to a use case/service.

In FIG. 14, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 15 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

As described above, the present disclosure is applicable to various wireless communication systems.

## Claims

1. A method of transmitting and receiving a signal by a user equipment (UE) in a wireless communication system, the method comprising:
receiving downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.

2. The method of claim 2, wherein the first threshold is a slot gap of one or more slots.

3. The method of claim 1, wherein L is a density of the PTRSs in the time domain configured through radio resource control (RRC) signaling.

4. The method of claim 1, wherein a first PTRS among the PTRSs is mapped to a symbol after the (L-1)-symbol gap starting from the first DMRS, based on the gap between the physical channels being less than the first threshold, and
wherein second PTRS(s) among the PTRSs are mapped at the (L-1)-symbol gap starting from the first PTRS, and a third PTRS among the PTRSs is mapped to a symbol after the (L-1)-symbol gap starting from a second DMRS, rather than the (L-1)-symbol gap starting from a last second symbol among the second PTRS(s), based on the second DMRS being located after the first DMRS in the time domain.

5. The method of claim 1, wherein a first PTRS among the PTRSs is mapped to a symbol after the (L-1)-symbol gap starting from the first DMRS, based on the gap between the physical channels being less than the first threshold, and
wherein second PTRS(s) among the PTRSs are mapped at the (L-1)-symbol gap starting from the first PTRS, and a third PTRS among the PTRSs is mapped to a symbol after the (L-1)-symbol gap including a last symbol of a slot in which the first DMRS is included, rather than the (L-1)-symbol gap starting from a last second PTRS among the second PTRS(s).

6. The method of claim 1, wherein a first PTRS among the PTRSs is mapped to a symbol after the (L-1)-symbol gap starting from the first DMRS, based on the gap between the physical channels being less than the first threshold value, and
wherein second PTRS(s) among the PTRSs are mapped at the (L-1)-symbol gap starting from the first PTRS, and a third PTRS among the PTRSs is mapped to a foremost symbol in a next slot of a slot in which the first DMRS is included, rather than the (L-1)-symbol gap starting from a last second PTRS among the second PTRS(s).

7. The method of claim 1, wherein the first threshold is a symbol gap Y, and
wherein Y is determined based on (i) a subcarrier spacing (SCS), (ii) a maximum number of a plurality of physical channels scheduled by one DCI, or (iii) radio resource control (RRC) signaling.

8. The method of claim 7, wherein a default value of Y is determined based on the SCS.

9. The method of claim 1, wherein the PTRSs are mapped at the (L-1)-symbol gap based on the first DMRS, based on the gap between the physical channels being less than the first threshold and the number of the physical channels being equal to or greater than a second threshold.

10. The method of claim 1, wherein, in determining the gap between the physical channels, a physical channel overlapping with signals that are not scheduled by the DCI is unused.

11. The method of claim 1, wherein the gap between the physical channels is included in the (L-1)-symbol gap, based on the gap between the physical channels being less than a third threshold, and
wherein the gap between the physical channels is not included in the (L-1)-symbol gap, based on the gap between the physical channels being equal to or greater than the third threshold.

12. The method of claim 1, wherein the physical channels are physical downlink shared channels (PDSCHs) or physical uplink shared channels (PUSCHs).

13. A user equipment (UE) for transmitting and receiving a signal in a wireless communication system, the UE comprising:
at least one transceiver;
at least one processor; and
at least one memory connected operably to the at least one processor and configured to store instructions that, when executed, cause the at least one processor to perform specific operations,
wherein the specific operations comprise:
receiving downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.

14. An apparatus for a user equipment (UE), the apparatus comprising:
at least one processor; and
at least one computer memory connected operably to the at least one processor and configured to cause the at least one processor to perform operations based on execution,
wherein the operations comprise:
receiving downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.

15. A computer-readable non-volatile storage medium including at least one computer program that causes at least one processor to perform operations, the operations comprising:
receiving downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.

16. A method of transmitting and receiving a signal by a base station (BS) in a wireless communication system, the method comprising:
transmitting downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.

17. A base station (BS) for transmitting and receiving a signal in a wireless communication system, the BS comprising:
at least one transceiver;
at least one processor; and
at least one memory connected operably to the at least one processor and configured to store instructions that, when executed, cause the at least one processor to perform specific operations,
wherein the specific operations comprise:
transmitting downlink control information (DCI) for scheduling a plurality of physical channels; and
transmitting or receiving the physical channels based on the DCI,
wherein phase tracking reference signals (PTRSs) are mapped at an (L-1)-symbol gap based on each demodulation reference signal (DMRS) in the physical channels, based on a gap between the physical channels being equal to or greater than a first threshold, and
wherein the PTRSs are mapped at the (L-1)-symbol gap based on a first DMRS in a first physical channel which is most advanced in a time domain among the physical channels, based on the gap between the physical channels being less than the first threshold.
